Europäisches Patentamt

European Patent Office

Office européen des brevets

(11) Publication number: **0 172 609**
**A1**

# (12) EUROPEAN PATENT APPLICATION

(21) Application number: **85303711.7**

(22) Date of filing: **28.05.85**

(51) Int. Cl.⁴: **G 11 B 5/52**

(30) Priority: **02.08.84 US 636932**
**02.08.84 US 636931**

(43) Date of publication of application:
**26.02.86 Bulletin 86/9**

(84) Designated Contracting States:
**DE FR GB**

(71) Applicant: **MAGNETIC PERIPHERALS INC.**
**8100-34th Avenue South**
**Minneapolis Minnesota 55440(US)**

(72) Inventor: **Schwarz, Theodore Albert**
**8712 Sandro Road**
**Bloomington Minnesota 55438(US)**

(72) Inventor: **Schwarz, Edward Lester**
**2825 Brookwood Terrace**
**Minneapolis Minnesota 55410(US)**

(74) Representative: **Caro, William Egerton et al,**
**J. MILLER & CO. Lincoln House 296-302 High Holborn**
**London WC1V 7JH(GB)**

(54) **Data transcription magnetic head assembly.**

(57) A data transcription magnetic head assembly of the rotating type, includes an auxiliary pole (23) having a tip arranged to be disposed adjacent the first side of a recording medium (22) and a winding (18) around the auxiliary pole. A pole carrier (14) has an end face (26) and a periphery (27) whose intersection with the end face is a circle (29), the pole carrier (14) being mounted for rotation about an axis (11) centred on and perpendicular to the circle of intersection, and positioned to place at least an arc of the circle of intersection in substantially contacting relationship along its length across a second side of the recording medium (22). A main pole (15) is mounted on the pole carrier (14) and has transcribing tips (30) coincident with the circle of intersection (29) such that for each revolution of the pole carrier, the transcribing tips (30) are directed toward and sweeps across the recording medium (22) along the arc of the circle of intersection in substantially contacting relationship with the recording medium and adjacent to the auxiliary pole tip to allow data transcription.

Fig. 1

EP 0 172 609 A1

## DATA TRANSCRIPTION MAGNETIC HEAD ASSEMBLY

This invention relates to data transcription magnetic head assemblies of the rotating type for use with a vertical format single layer magnetic recording medium.

In certain magnetic recording applications, very high data rates are necessary. To accommodate these high data rates, it is customary to employ a rotating member or head carrier on which one or more read/write heads are mounted. The member is rotated so that the heads it carries sweep across the medium, allowing high data rates to be achieved without excessively high medium speed. The usual application is in video recording.

A problem with these rotary heads involves supplying the signals to the heads for writing and receiving the signals for reading. Slip rings are an obvious solution, but the relatively low signal level involved, particularly during reading or playback, results in poor playback accuracy. It is possible to include an on-board amplifier which can increase the power of the signal read back before it is placed on the slip rings. This, however, requires additional slip rings to transmit the power to the on-board amplifier, a multiplexer to switch from one head to another if more than one are employed, and timing control circuitry for the multiplexer.

It is also possible to use a transformer coupling between the rotating head and the remainder of the system, one winding of the transformer rotating with the head carrier. All of these solutions add additional complexity to a system whose price and reliability is not totally satisfactory with present technology. Accordingly, there is strong motivation to reduce the cost and complexity of these assemblies without affecting performance.

According to the present invention there is provided a data transcription magnetic head assembly of the rotating type, for use with a vertical format single layer magnetic recording medium, the assembly including: an auxiliary pole having a tip arranged to be disposed adjacent the first side of a recording medium; a winding around the auxiliary pole; a pole carrier having an end face and a periphery whose intersection with the end face is a circle, said pole carrier being mounted for rotation about an axis centred on and perpendicular to the circle of intersection, and positioned to place at least an arc of the circle of intersection in substantially contacting relationship along its length across a second side of the recording medium; and at least one main pole mounted on the pole carrier, the or each main pole having a transcribing tip coincident with the circle of intersection such that for each revolution of the pole carrier, the or each transcribing tip is directed toward and sweeps across the recording medium along the arc of the circle of intersection in substantially contacting relationship with the recording medium and adjacent to the auxiliary pole tip to allow data transcription.

The or each pole may be mounted on the end face of the pole carrier to extend radially relative to the axis of rotation of the pole carrier, the axis of rotation of the pole carrier being substantially parallel to the area of the recording medium on which the data being transcribed is stored.

Preferably the face of the auxiliary pole conforms to the curvature of the periphery of the circle of intersection. Thus ideally the face of the auxiliary pole should conform substantially to the path swept by the transcribing tip of the or each main pole.

Means may be provided for creating pressure between the recording medium in the form of a tape and the circle of intersection for causing the tape to conform to the arc of the circle of intersection and maintain a substantially contacting relationship with the transcribing tip of the or each main pole sweeping across it.

The head assembly may include a tape guide adjacent the pole carrier for keeping the tape positioned between the auxiliary pole tip and the pole carrier.

The head assembly may include at least two main poles, a first having a transcribing tip area of preselected size in substantially contacting relationship with the recording medium, and a second having a transcribing tip area of size relatively smaller in length and width as compared to the first main pole. The tip length of the second main pole may be substantially 10-25 percent that of the first main pole. The tip width of the second main pole may be substantially 80-90 percent of the first main pole.

Preferably, the first and second poles alternate around the periphery of the pole carrier.

In one embodiment a portion of the or each main pole adjacent its transribing tip is carried on the periphery of the pole carrier.

The auxiliary pole may have a substantially flat area at its tip said flat area being located adjacent the arc of the circle of intersection in substantially contacting relationship with the recording medium, and oriented to be parallel to the plane defined by the circle of intersection.

The head assembly may include compressing the record medium between said flat area and the pole carrier defined by the circle of intersection. The compressing means may comprise a spring urging one of the pole carriers and the auxiliary pole towards each other.

The periphery of the pole carrier is preferably a circular cylinder of revolution.

The invention is illustrated, merely by way of example, in the accompanying drawings, in which:-

Figure 1 is a side view of a magnetic tape transcribing apparatus including a data transmission magnetic head assembly according to the present invention in which the axis of a pole carrier is generally perpendicular to the area of the medium on which the data being transcribed is stored;

Figure 2 is a section view of the apparatus of Figure 1, viewing parallel to the axis of rotation of the pole carrier;

Figure 3 is a sketch of individual data tracks created on its medium by the apparatus shown in Figures 1 and 2;

Figure 4 is an alternative embodiment of a data transcription magnetic head assembly according to the present invention;

Figure 5 is a side view of a magnetic tape transcribing apparatus including a data transmission magnetic head assembly according to the present invention in which a pole carrier is generally parallel to the area of medium on which the data being transcribed is stored;

Figure 6 is a section view of the apparatus of Figure 5 viewing parallel to the axis of rotation of the pole carrier; and

Figure 7 is a detail drawing of a portion of the pole carrier of Figure 1, depicting main poles having different transcribing functions.

Throughout the drawings like parts have been designated by the same reference numerals.

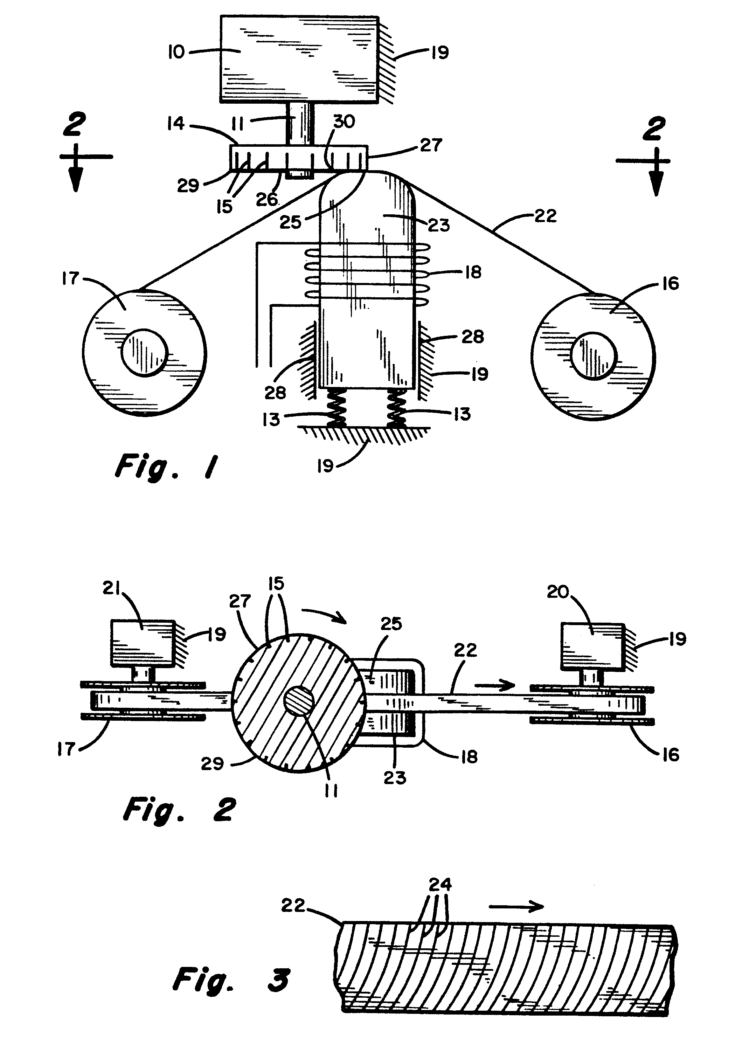

Turning first to Figures 1 and 2, a data trancription magnetic head assembly according to the present invention for use with a vertical format single layer magnetic recording medium is shown as comprising an auxiliary pole 23, having a winding 18 round its body. The pole 23 is composed of a magnetic material such as soft iron or ferrite and is arranged to slide in a guideway 28 carried by a frame 19. Both the guideway 28 and the frame 19 are shown only symbolically in Figure 1 since their detailed structure is immaterial to the present invention. The auxiliary pole 23 is urged in a first direction, shown as upwards in Figure 1, by compression springs 13 interposed between it and the frame 19. The tip of the auxiliary pole 23 has a flat land or area 25, see Figure 2, which is smoothly blended into the remainder of the tip. A magnetic tape 22 as the magnetic recording medium is stretched taut across this flat area 25 by action of reel motors 20,21 carried by frame 19 and driving take-up reels 16 and 17, respectively, on which the portions of the tape not being presented for data transcription are stored (see Figure 2).

A motor 10 is also mounted on the frame 19 and drives a shaft 11 on which a pole carrier 14 is mounted for rotation. The pole carrier 14 is a circular cylinder whose height may be small relative to its radius and includes a cylindrical periphery 27 and an end face 26 shown edge-on in Figure 1. The end face 26 may be flat or it may be slightly concave. The periphery 27 and the end face 26 intersect to form a circle, hereafter referred to as the circle of intersection 29 shown in projected outline in Figure 2. The mounting of the pole carrier 14 is such that the shaft 11 is concentric with and perpendicular to the circle of intersection 29. Around the periphery 27 of the pole carrier 14 a number of equi-spaced main poles 15 are mounted, each with a respective transcribing tip 30 (shown in Figure 1) positioned coincident with the circle of intersection 29. The main poles 15 may comprise printed magnetic ink or sections of fine iron wire. The major axis of each of the main poles 15 adjacent its tip 30 is directed toward the tape 22.

The auxiliary pole 23 and the pole carrier 14 are positioned relative to each other such that at least an arc of the circle of intersection 29 is in substantially contacting relationship along its length across the surface of the tape 22, as the tape passes across the flat area 25 of the auxiliary pole 23. The transcribing tip 30 of each of the main poles 15 is positioned on the periphery such that it sweeps across the tape 22 along the arc of the circle of intersection 29 in substantially contacting relationship with the tape while the pole carrier 14 rotates. With such physical relationship between the auxiliary pole 23 and the main poles 15, signals placed in the winding 18 allow data to be written onto the tape 22 as the reel motors 20,21 slowly move the tape 22 across the flat area 25.

In Figure 3, representative data tracks 24 are shown as they are created by individual main poles 15 sweeping across the tape 22 moving to the right at a linear speed relatively low compared to the tangential speed of the main poles 15. It should be observed that the length of the chord between adjacent transcribing tips 30 on the periphery 27 should be no less than the width of the tape 22, or at least the width of recording surface on it, so as to prevent two main poles 15 from simultaneously sweeping across the tape 22 and causing erroneous data transcription. Reading occurs by sweeping individual main poles 15 across the tape 22 along individual data tracks in a sequential fashion so as to cause a signal to be induced in the winding 18 indicative of the recorded data.  It is necessary that the rotational speed of the pole carrier 14 be synchronised, as well known, with movement of the tape 22 so that each transcribing tip 30 sweeps along the centre of the track being read.

It is known that the transcribing tips 30 of the main poles 15 in a vertical recording system must be in substantially contacting relationship with the tape for proper data transcription to occur.  The reel motors 20,21 must keep the tape 22 stretched tautly across the flat area 25, and to effect this employ known techniques.  The springs 13 urge the auxiliary pole 23 along the path dictated by the guideway 28 to cooperate in causing the tape 22 to assume exactly the shape of the flat area 25 of the auxiliary pole 23 where it passes across it, in particular conforming it to the shape of the flat area 25.  The springs 13 must generate enough force to hold the tape 22 against the arc of the circle of intersection 29 which must be in substantially contacting relationship with the tape 22.  Since the plane defined by the circle of intersection 29 is precisely parallel to the flat area 25 by virtue of the perpendicular positioning of the axis of the shaft 11 relative to the flat area 25, the entire arc of the circle of intersection 29 crossing the tape 22 stays in constant contact with the tape 22, and thus the transcribing tips 30 of the main poles 15 also stay in substantially contacting relationship with the tape 22.

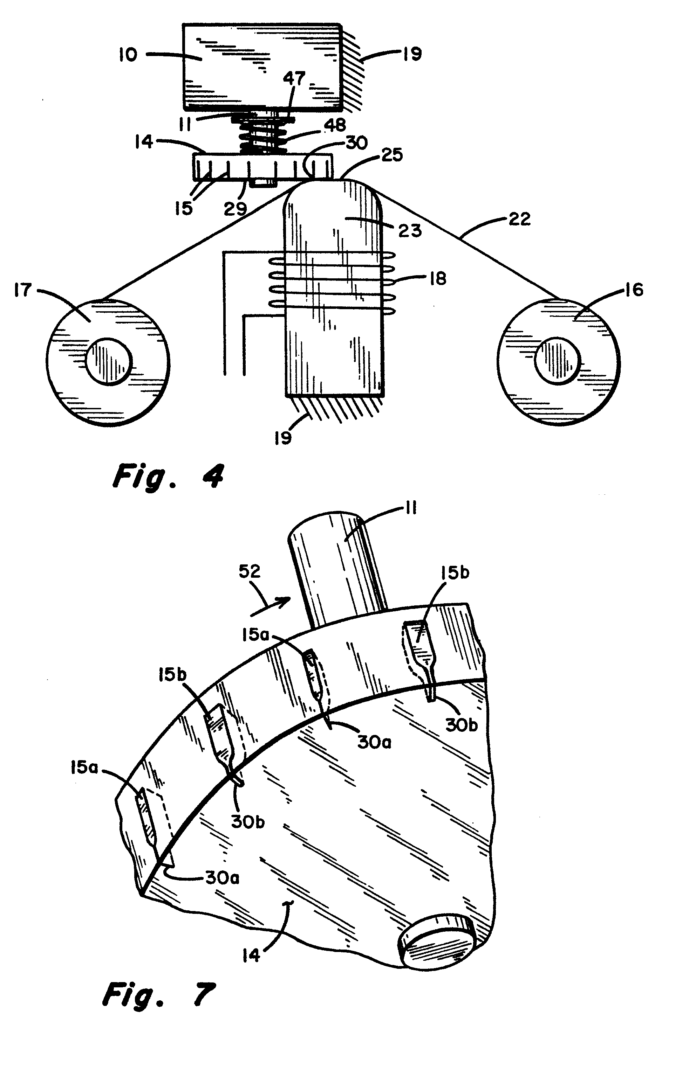

An alternative mechanism, very similar to that of Figure 1, for ensuring the substantially contacting relationship between the transcribing tips of the main poles 15 with the tape 22 is shown in Figure 4.  In this embodiment, the auxiliary pole 23 is rigidly affixed to the frame 19. The pole carrier 14 has a splined interior hole and is mounted so that it can slide over a length of the shaft 11 on matching splines. A stop 47 is fixed to the shaft 11 and a compression spring 48 encircles the shaft 11 between the stop 47 and the upper surface of the pole carrier 14. The spring 48 provides constant pressure on the pole carrier 14 causing the circle of intersection 29 to lie on the flat area 25 at the tip of the auxiliary pole 23 with the tape 22 between them so that as the shaft 11 rotates the pole carrier 14, the transcribing tips 30 of the main poles 15 are swept across the width of the tape 22 in substantially contacting relationship with the tape 22.

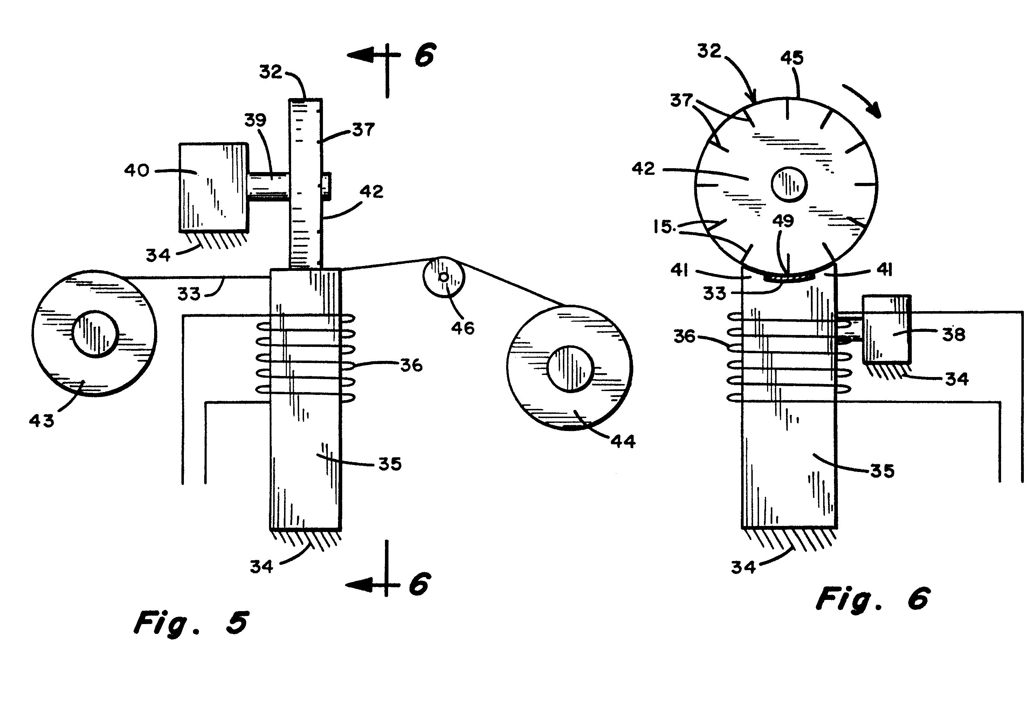

A further emobidment of a data transcription magnetic head assembly according to the present invention is shown in Figures 5 and 6, and generally involves the use of a pole carrier 32 which carries on its end face 42 a plurality of main poles 37, whose lengths at least adjacent their transcribing tips 49 at the periphery of the pole carrier 32 extend along radii of the pole carrier. In Figure 2, an auxiliary pole 35 is mounted on a frame 34 shown schematically with its tip adjacent a first side of a tape 33. A winding 36 around the auxiliary pole 35 provides for applying a write current and receiving the read voltage. The tape is carried on storage reels 43,44. The storage reel 43 is driven by a motor 38 shown in Figure 6 and which is mounted on the frame 34. The motor 38 which drives the reel 43 and a similar motor (not shown) driving the reel 44 are controlled by a conventional mechanism to keep the tape 33 relatively taut.

A motor 40 mounted on the frame 34 drives the pole carrier 32 carried on a shaft 39. The main poles 37 at least near their transcribing tips 49 extend generally radially relative to the axis of rotation of the pole carrier 32. The end face 42 of the pole carrier 32 intersects the periphery of the pole carrier to form a circle of intersection 45 shown in Figure 6. The shaft 39 is perpendicular and precisely concentric with the circle of intersection 45. The main poles 37 are arranged such that their transcribing tips 49 are coincident with the circle of intersection 45. The pole carrier 32 is mounted so that the circle of intersection 45 is positioned adjacent to the tip of the auxiliary pole 35 with the transcribing tips of the main poles 37 adjacent the auxiliary pole 35 at any given time directed toward the auxiliary pole 35 and adjacent a second side of the tape 33. A clearance space between the periphery of the pole carrier 32 and the tip of the auxiliary pole 35 allows the tape 33 to pass between them. The face of the tip of the auxiliary pole 35 conforms to the curvature of the periphery of the pole carrier 32.

Shoulders 41 fill in at least a portion of the edges of the clearance space and function as guides to keep the tape 33 accurately positioned between the tip of the auxiliary pole 35 and the pole carrier 32. Thus, as the pole carrier 32 rotates, friction between it and the tape 33 does not drag it from directly between the auxiliary pole 35 and the pole carrier 32.

It is preferred that the section of the tape 33 between the reel 44 and the pole carrier 32 be stretched over the circle of intersection 45. An intermediate roller 46 is positioned to form a slight bend in the tape 33 as it passes over the circle of intersection 45 to cause constant pressure between them so that the cross-section of the tape conforms itself to an arc of the circle of intersection 45 and places the circle of intersection 45 in substantially contacting relationship with the tape 33 in this area. The arc length between adjacent main poles 37 on the pole carrier 32 should be slightly greater than the width of the tape 33, or at least the strip of recording material on it, so that one transcribing tip 49 has completely swept past the tape 33 before the transcribing tip 49 of another main pole 37 has made contact with it.

As explained in relation to Figure 1, rotation of the pole carrier 42 by the motor 40 causes individual transcribing tips 49 of the main poles 37 to sweep across the surface of the tape 33.

As the tape 33 is slowly moved in a direction generally parallel to the axis of the shaft 39, data transcribing occurs on the surface of the tape 33 as the individual transcribing tips 49 sweep across it. Data tracks are created on the surface of the tape 33 when a write current is applied to the winding 36. Assuming constant speeds for both the pole carrier 32 and the tape 33, the individual data tracks will be parallel straight lines rather than curved, as shown in Figure 3. Reading occurs by simply receiving the signals generated in the winding 36 while the tape 33 is moved and the pole carrier 32 rotates. In both cases, the movement of the pole carrier 32 and the tape 33 in synchronised fashion, mentioned in conjunction with Figures 1 and 2, is required.

Figure 7 discloses a preferred structure for the main poles 15 and the pole carrier 14. As mentioned earlier, writing usually involves much higher flux levels emanating from the transcribing tips so as to saturate the medium. Furthermore, it is usual to write with a relatively wide transcribing tip. Conversely, resolution is improved and sensitivity to noise is reduced during reading by a transcribing tip which is relatively narrow and short compared to a preferred write transcribing tip.

Accordingly, in Figure 7, there are shown two different poles 15a ,15b both carried on the edge of the pole carrier 14, of which only a segment is shown. The pole 15b is a write pole, and the pole 15a is a read pole. Approximate motion of the periphery of the pole carrier 14 and the individual transcribing tips 30a,30b relative to the tape (not shown) is indicated by arrow 52. The length of each read transcribing tip 30a is relatively smaller (measured tangentially to the periphery of the pole carrier 14) and its width relatively smaller (measured along a radius of the pole carrier 14) as compared to a typical write transcribing tip 30b. Of course, it is preferred to alternate such read poles 15a and write poles 15b around the periphery of the carrier 14.

In operation, rotation of the shaft 11 causes the transcribing tips 30a,30b to move in the direction indicated by the arrow 52 relative to the tape. The transcribing tip 30b thus sweeps across the tape during the write function. Write current signals in the winding on the auxiliary pole (not shown in Figure 7) must be synchronised with the times that each write pole 15b sweeps across the tape medium. The reading function too must be synchronised with the times that a read pole 15a is sweeping across the medium.

To accomplish the results discussed above, it is preferred that the read transcribing tip 30a width be approximately 80-90 percent of the width of the write transcribing tip 30b. Preferred dimensions for the write transcribing tip 30b are approximately 25 microns wide and 1-2 microns long. The read transcribing tip 30a will thus be around 20-22 microns wide and 0.1-0.5 microns long. The height (dimension perpendicular to both width and length) of each main pole should be at least 10 times the width. Cross sectional area of each pole away from its transcribing tip should be at least twice that of the corresponding transcribing tip area, as shown by the dotted line outlines in Figure 7.

It is possible that this invention can be adapted to permit high speed data transcription on media other than magnetic tape. It is known that data transcription can occur on any medium which is physically positioned directly between an auxiliary pole and the moving main pole and in substantially contacting relationship with the main transcribing tip. So, for example, it is possible using the apparatus of Figure 1 to substitute a revolving disc recording medium for the tape 22 and construct "tracks" formed of concentric circles on the disc, each track comprising a large number of short side-by-side tracks, each approximately radial to the disc itself, and each storing information in serial fashion. By shifting the disc radially relative to the carrier and the auxiliary pole, main tracks of varying radii can be written and then accessed for reading at a later time. The edges of each main track are defined by the width of the auxiliary pole.

In vertical recording, the so-called single layer medium system employs a very large auxiliary pole carrying a winding, and a relatively small main pole or poles which in general need not be connected in a direct magnetic circuit to the auxiliary pole, instead relying solely on stray flux to complete the flux path. It is possible to write and read with such a main pole or poles on a recording medium which is stationary with respect to the auxiliarly pole by moving the main pole or poles relative to the recording medium. It is also possible to read and write on such a recording medium which is moving relatively slowly with reference to the auxiliary pole, and with the main pole or poles moving relatively rapidly with respect to the recording medium. Satisfactory data transcription can only occur where the recording medium does not protrude past the edges of the auxiliary pole, and when the tip of the main pole or poles is substantially in contact with the recording medium.

CLAIMS

1. A data transcription magnetic head assembly of the rotating type for use with a vertical format single layer magnetic recording medium, the assembly including: an auxiliary pole (23,35) having a tip arranged to be disposed adjacent the first side of a recording medium (22,33); a winding (18,36) around the auxiliary pole; a pole carrier (14,32) having an end face (26,42) and a periphery (27) whose intersection with the end face is a circle (29,45) said pole carrier (14,32) being mounted for rotation about an axis (11,39) centred on and perpendicular to the circle of intersection, and positioned to place at least an arc of the circle of intersection in substantially contacting relationship along its length across a second side of the recording medium (22,33); and at least one main pole (15,37) mounted on the pole carrier (14,32) the or each main pole having a transcribing tip (30,49) coincident with the circle of intersection (29,45) such that for each revolution of the pole carrier, the or each transcribing tip (30,49) is directed toward and sweeps across the recording medium (22,33) along the arc of the circle of intersection in substantially contacting relationship with the recording medium and adjacent to the auxiliary pole tip to allow data transcription.

2. A head assembly as claimed in claim 1 characterised in that the or each main pole (37) is mounted on the end face (42) of the pole carrier (32) to extend radially relative to the axis of rotation of the pole carrier, the axis of rotation of the pole carrier being substantially parallel to the area of the recording medium (33) on which the data being transcribed is stored.

3. A head assembly as claimed in claim 1 or 2 characterised in that the face (41) of the auxiliary pole (35) conforms to the curvature of the periphery of the circle of intersection (45).

4. A head assembly as claimed in any preceding claim characterised in that means (46) are provided for creating pressure between the recording medium (33) in the form of a tape and the circle of intersection (45) for causing the tape to conform to the arc of the circle of intersection and maintain a substantially contacting relationship with the transcribing tip of the or each main pole (37) sweeping across it.

5. A head assembly as claimed in claim 4 characterised by including a tape guide (45) adjacent the pole carrier (32) for keeping the tape positioned between the auxiliary pole tip and the pole carrier.

6. A head assembly as claimed in any preceding claim characterised by including at least two main poles (15a,15b), a first (15b) having a transcribing tip area (30b) of preselected size in substantially contacting relationship with the recording medium (22), and a second (15a) having a transcribing tip area (30a) of size relatively smaller in length and width as compared to the first main pole (15b).

7. A head assembly as claimed in claim 6 characterised in that the tip length of the second main pole (15a) is substantially 10-25 percent that of the first main pole (15b).

8. A head assembly as claimed in claim 6 or 7 characterised in that the tip width of the second main pole (15a) is substantially 80-90 percent of the first main pole (15b).

9. A head assembly as claimed in any of claims 6 to 8 characterised in that the first and second poles (30a,30b) alternate around the periphery of the pole carrier (14).

10. A head assembly as claimed in any preceding claim characterised in that the or each main pole (15,37) adjacent its transcribing tip is carried on the periphery of the pole carrier (14,32).

11. A head assembly as claimed in any preceding claim characterised in that the auxiliary pole (23) has a substantially flat area (25) at its tip, said flat area being located adjacent the arc of the circle of intersection (29) in substantially contacting relationship with the recording medium (22), and oriented to be parallel to the plane defined by the circle of intersection.

12. A head assembly as claimed in claim 11 characterised by compressing means (13) for compressing the record medium (22) between said flat area (25) and the pole carrier (14) defined by the circle of intersection (29).

13. A head assembly as claimed in claim 12 characterised in that compressing means comprises a spring (13) urging one of the pole carriers (14) and the auxiliary pole (23) towards each other.

14. A head assembly as claimed in any preceding claim characterised in that the periphery of the pole carrier (14,32) is a circular cylinder of revolution.

15. A head assembly as claimed in any preceding claim characterised in that the axis of rotation of the pole carrier (14,32) is orientated generally perpendicularly to the area of the medium on which the data being transcribed is stored.

**Fig. 1**

**Fig. 2**

**Fig. 3**

0172609

Fig. 4

Fig. 7

0172609

Fig. 6

Fig. 5

| | DOCUMENTS CONSIDERED TO BE RELEVANT | | EP 85303711.7 |
|---|---|---|---|
| **Category** | **Citation of document with indication, where appropriate, of relevant passages** | **Relevant to claim** | **CLASSIFICATION OF THE APPLICATION (Int Cl 4)** |
| Y | <u>DE - A1 - 3 213 928</u> (CANON)<br>* Fig. 5,9A,9B,10,19; abstract * | 1,2 | G 11 B 5/52 |
| Y | <u>AT - B - 349 226</u> (PHILIPS)<br>* Fig. 1-6; claims 1,2 * | 1,2 | |
| Y | <u>DE - A1 - 3 331 254</u> (SONY)<br>* Fig. 1; page 3, line 15 - page 4, line 2 * | 1,2 | |
| Y | <u>AT - B - 358 294</u> (PHILIPS)<br>* Fig. 1-13; claims 1-5 *<br>---- | 1,2 | |

**TECHNICAL FIELDS SEARCHED (Int Cl 4)**

G 11 B  5/00
H 01 F 10/00

The present search report has been drawn up for all claims

| Place of search | Date of completion of the search | Examiner |
|---|---|---|
| VIENNA | 15-11-1985 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82